# EUROPÄISCHE PATENTSCHRIFT

(11) **EP 3 103 560 B1**
(45) Veröffentlichungstag und Bekanntmachung des Hinweises auf die Patenterteilung: **23.12.2020**
(21) Anmeldenummer: 16169268.6
(22) Anmeldetag: 12.05.2016
(51) Int. Cl.: B21J 15/04, B21J 15/36

(54) **VERFAHREN ZUM BEFESTIGEN EINES NIETELEMENTS UND ENTSPRECHENDES BEFESTIGUNGSSYSTEM**
METHOD FOR FIXING A RIVET AND CORRESPONDING FIXING SYSTEM
PROCEDE DE FIXATION D'UN RIVET ET SYSTEME DE FIXATION CORRESPONDANT

(30) Priorität: 11.06.2015 DE 102015109255
(43) Veröffentlichungstag der Anmeldung: 14.12.2016
(73) Patentinhaber: Profil Verbindungstechnik GmbH & Co. KG, 61381 Friedrichsdorf (DE)
(72) Erfinder: Lembach, Andreas, 64295 Darmstadt (DE); Diehl, Oliver, 61350 Bad Homburg v. d. H. (DE)
(74) Vertreter: Manitz Finsterwald Patent- und Rechtsanwaltspartnerschaft mbB

(56) Entgegenhaltungen:
- DE-A1- 4 239 584
- DE-B3-102010 033 714
- US-A1- 2004 031 551

## Beschreibung

Die vorliegende Erfindung betrifft ein Verfahren zum Befestigen eines Nietelements an einem Werkstück, das ein zur Aufnahme eines Nietabschnitts des Nietelements vorgesehenes, vorgeformtes Loch aufweist.

Ein Verfahren zum Befestigen eines Nietelements ist beispielsweise an der DE 42 39 584 A1 bekannt.

Ein solches Verfahren ist grundsätzlich bekannt und umfasst typischerweise, dass der Nietabschnitt im Zuge des Befestigungsvorgangs in das vorgeformte Loch eingeführt und derart verformt wird, dass der Nietabschnitt das Werkstück hintergreift und zwischen dem Nietelement und dem Werkstück eine formschlüssige und auch kraftschlüssige Nietverbindung hergestellt ist. Der Nietabschnitt ist beispielsweise ein hohlzylindrischer Abschnitt, der an einem Ende auf bekannte Weise radial nach außen umgebogen bzw. umgebördelt wird, um die Nietverbindung herzustellen. Bei der industriellen Anwendung dieses Verfahrens wird typischerweise ein Befestigungssystem bestehend aus einem Setzkopf und einer Matrize eingesetzt. Hierbei wird das Werkstück zunächst auf einer Auflagefläche der Matrize positioniert, so dass das Loch des Werkstücks und ein zentraler Stempel der Matrize fluchten. Sodann wird das Nietelement mit seinem Nietabschnitt mittels des Setzkopfes durch das vorgeformte Loch des Werkstücks in Richtung der Matrize bewegt und gegen den Stempel der Matrize gepresst, um den Nietabschnitt zur Herstellung der Nietverbindung zu verformen. Damit der Nietabschnitt das Werkstück hintergreifen kann, wird das Werkstück vor dem Befestigen des Niet elements im Bereich um das Loch sickenartig verformt. Dadurch entsteht zwischen dem Stempel und der Wandung des Lochs ein Spalt, in den der Nietabschnitt eingebracht wird. D.h. in diesem Bereich wird ein genügend großer Raum zwischen dem Werkstück und der Matrize bereitgestellt, in den der Nietabschnitt eingreifen kann. Nachteilig ist dabei allerdings, dass die vor dem Befestigen notwendige Verformung des Werkstücks zur Bildung der Sicke unter Umständen einen separaten Vorverarbeitungsschritt erfordert, welcher zusätzlich zu dem eigentlichen Befestigen des Nietelements durchgeführt werden muss. Ferner muss die entsprechende Verformung des Werkstücks im Bereich um das Loch - die aus vielerlei Gründen störend sein kann - an die Dimensionen des umzuformenden Nietabschnitts, z.B. an die Dicke und Länge des Nietabschnitts, angepasst sein, sodass die gewünschte Umformung des Nietabschnitts und das zuverlässige Hintergreifen des Werkstücks auch tatsächlich ermöglicht werden.

Es ist daher eine Aufgabe der vorliegenden Erfindung, ein Verfahren der eingangs genannten Art zu schaffen, bei dem die vorstehend erläuterten Probleme vermieden werden.

Die Lösung dieser Aufgabe erfolgt durch ein Befestigungssystem mit den Merkmalen des Anspruchs 1, sowie durch ein Verfahren mit den Merkmalen des Anspruchs 7 Erfindungsgemäß wird das Werkstück vor dem Befestigungsvorgang mittels zumindest einem während dem Befestigungsvorgang fest mit einer Matrize zum Umformen des Nietabschnitts verbundenen Abstandshalter in einem wohldefinierten Abstand von einer Anlagefläche der Matrize positioniert, so dass zwischen einer Wandung des Lochs und einem zum Umformen des Nietabschnitts vorgesehenen Stempel der Matrize ein Spalt gebildet ist. Der Nietabschnitt wird im Zuge des Befestigungsvorgangs in den Spalt eingebracht und durch den Stempel umgeformt, um das Werkstück im Bereich des Loches zu hintergreifen.

Ein wesentlicher Vorteil dieser Lösung besteht darin, dass das Werkstück mittels des Abstandshalters in einem definierten Abstand von einer Anlagefläche der Matrize gehalten wird, wodurch ein zum hintergreifenden Umformen des Nietabschnitts ausreichend großer Spalt genau festgelegt und insbesondere während dem Befestigungsvorgang zuverlässig eingehalten werden kann. In dieser Hinsicht ist das erfindungsgemäße Verfahren beispielsweise besonders geeignet für unterschiedlich dimensionierte Nietelemente und Werkstücke, da die zum Umformen des Nietabschnitts erforderliche Weite des Spalts durch den Abstandshalter festgelegt und dementsprechend einfach angepasst werden kann. Die Weite des Spalts kann identisch zu dem Abstand sein. Es ist allerdings auch möglich, dass die Anlagefläche gegenüber einer Umformfläche des Stempels der Matrize - in der Regel nur leicht - abgesetzt ist. In diesem Fall weicht die Weite des Spalts von dem Abstand ab.

Ein weiterer Vorteil des erfindungsgemäßen Verfahrens ist darin zu sehen, dass das Nietelement direkt an dem vorgelochten Werkstück befestigt werden kann und keine Vorverarbeitungsschritte nötig sind. Das Werkstück kann eben ausgebildet bleiben und es muss nicht im Bereich des Loches eine sickenartige Verformung vorgesehen sein. Ein Verzicht auf eine sickenartige Verformung ist darüber hinaus auch insofern vorteilhaft, da eine sickenartige Verformung einen Vorsprung darstellt, welcher z.B. bei einem Positionieren in und/oder bei einem Entfernen des Werkstücks aus einem jeweiligen Bearbeitungswerkzeug störend sein kann. Auf diese Weise wird - insbesondere bei einem angewinkelten Werkstück - z.B. auch ein Lochen des Werkstücks quer zur Entformungsrichtung des Werkstücks ermöglicht, ohne dass eine Bewegung des Werkstücks durch eine sickenartige Verformung behindert wird.

Es versteht sich, dass das Werkstück im Bereich um das Loch nicht vollkommen eben ausgebildet sein muss, um die Vorteile des erfindungsgemäßen Verfahrens zu realisieren. So stellen insbesondere geringe Verformungen des Werkstücks im Bereich um das Loch, welche beispielsweise durch die Bildung des Lochs verursacht werden, kein Problem für ein erfolgreiches Ausführen des erfindungsgemäßen Verfahrens dar.

Der Abstandshalter der Matrize kann lösbar mit der Matrize verbunden sein. Er ist bezüglich seiner Position justierbar. Die Position kann in der Ebene der Anlagefläche und/oder bezüglich der Länge eines z.B. aus der Anlagefläche herausragenden Abschnitts des Abstandshalters einstellbar sein. Hierdurch kann insbesondere der wohldefinierte Abstand bedarfsgerecht eingestellt werden. Außerdem kann die Position des Abstandshalters an die Erfordernisse des zu lagernden Werkstücks angepasst werden.

Weitere Ausführungsformen des erfindungsgemäßen Verfahrens sind in der Beschreibung, den Ansprüchen und den beigefügten Zeichnungen angegeben.

Gemäß einer Ausführungsform ragt der Abstandshalter aus der Anlagefläche der Matrize heraus, wobei der aus der Anlagefläche herausragende Abschnitt des Abstandshalters den Abstand zwischen dem Werkstück und der Anlagefläche der Matrize definiert. Grundsätzlich kann der Abstand aber auch in Bezug auf andere Abschnitte und Flächen der Matrize definiert werden. Beispielsweise kann der Abstand auch zwischen dem Werkstück und einem Abschnitt des Stempels der Matrize definiert werden. Erfindungsgemäß kommt es lediglich darauf an, dass der Abstand zwischen dem Werkstück und der Matrize so geartet ist, dass zwischen der Wandung des Loches des Werkstücks und der Unterseite des Werkstücks einerseits und dem Stempel der Matrize bzw. der Matrize selbst andererseits ein Spalt oder Zwischenraum gebildet ist, um den Nietabschnitt so umformen zu können, dass dieser das Werkstück im Bereich des Loches hintergreift und so eine formschlüssige und vorzugsweise auch kraftschlüssige Verbindung des Nietelements mit dem Werkstück hergestellt wird.

Das erfindungsgemäße Verfahren kann erweitert werden, indem das Werkstück während dem Befestigungsvorgang ab einem bestimmten Zeitpunkt zu der Anlagefläche der Matrize hin bewegt wird. Hierdurch kann beispielsweise ein abschließendes Einpressen des hintergreifenden Nietabschnitts in das Werkstück bewirkt werden, so dass die Unterseite des Werkstücks im Bereich des Loches trotz des hintergreifenden Nietabschnitts zumindest im Wesentlichen eben und/oder glatt ausgebildet ist. Ferner kann durch ein Einpressen des hintergreifenden Nietabschnitts zusätzlich ein Kraftschluss zwischen dem Nietelement und dem Werkstück herbeigeführt werden. Durch eine Bewegung des Werkstücks hin zu der Anlagefläche werden allerdings auch der Abstand und die Weite des zwischen dem Werkstück und dem Stempel gebildeten Spalts/Zwischenraums verringert. Damit der erfindungsgemäße Vorteil des zum Umformen des Nietabschnitts ausreichend großen Spalts dennoch erfüllt bleibt, muss sichergestellt werden, dass das Werkstück zumindest so lange in dem definierten Abstand zu der Anlagefläche der Matrize gehalten wird, bis der Nietabschnitt zumindest teilweise in den Spalt eingegriffen und/oder das Werkstück hintergriffen hat.

Gemäß einer Ausführungsform kann festgelegt sein, dass das Werkstück erst nach einem zumindest abschnittsweisen Einbringen des Nietabschnitts in den Spalt zu der Anlagefläche hin bewegt wird. Hierdurch wird verhindert, dass der Spalt durch eine Bewegung des Werkstücks hin zu der Anlagefläche bereits so weit verkleinert wird, dass der Nietabschnitt nicht mehr in den Spalt einzugreifen vermag. Mit anderen Worten wird eine Verkleinerung des Spalts jenseits der Dimensionen des einzubringenden Nietabschnitts dadurch verhindert, dass der Nietabschnitt bereits vor der Bewegung des Werkstücks in den Spalt eingreift.

Gemäß einer weiteren Ausführungsform wird das Werkstück erst nach dem Beginn eines Umformens des Nietabschnitts zu der Anlagefläche hin bewegt. Hierdurch kann sichergestellt werden, dass das Werkstück erst dann bewegt wird, wenn der Nietabschnitt bereits mit einer hinreichend großen Kraft gegen den Stempel der Matrize gepresst wird und hierdurch ein Umformen des Nietabschnitts bereits in Gang gesetzt wurde. Der Nietabschnitt muss hierbei noch nicht notwendigerweise in den Spalt eingreifen. Beispielsweise kann der Spalt vor Beginn der Bewegung des Werkstücks größer sein, als es für ein Eingreifen des Nietabschnitts eigentlich notwendig wäre. Somit kann ein Umformen des Nietabschnitts gleichzeitig zu der Bewegung des Werkstücks erfolgen, wobei der Nietabschnitt natürlich noch rechtzeitig in den Spalt eingebracht wird, bevor der zur Verfügung stehende Spalt/Zwischenraum zu klein geworden ist.

Hiervon abweichend kann das Werkstück auch erst nach dem Abschluss des Umformens des Nietabschnitts zu der Anlagefläche hin bewegt werden. Mit anderen Worten kann der Zeitpunkt des Beginns der Werkstückbewegung so gewählt werden, dass das Umformen des Nietabschnitts zumindest im Wesentlichen abgeschlossen ist und der Nietabschnitt das Werkstück bereits signifikant um- bzw. hintergreift. Eine unerwünschte Behinderung des Umformens des Nietabschnitts durch das Werkstück kann somit ausgeschlossen werden.

Gemäß einer bevorzugten Ausführungsform wird das Werkstück zumindest dadurch bewegt, dass ein Anschlagabschnitt des Nietelements, insbesondere ein Flanschabschnitt des Nietelements an einer der Matrize abgewandten Seite des Werkstücks zur Anlage kommt und das Werkstück hierdurch im Zuge einer weiteren Bewegung des Nietelements in Richtung zu der Anlagefläche hin bewegt wird. Alternativ oder zusätzlich kann ein das Nietelement einbringender Setzkopf, mittels welchem das Nietelement in Richtung der Matrize bewegt wird, eine Bewegung des Werkstücks hin zu der Anlagefläche bewirken. Das Werkstück muss allerdings nicht notwendigerweise aktiv bewegt werden. So kann eine Bewegung des Werkstücks hin zu der Anlagefläche auch als Relativbewegung umgesetzt werden, indem die Matrize zu dem Werkstück hin bewegt wird.

Das Werkstück wird gemäß einer weiteren Ausführungsform bei der Bewegung hin zu der Anlagefläche durch den Abstandshalter lokal verformt. Da der Abstandshalter erfindungsgemäß während dem Befestigungsvorgang fest mit der Matrize verbunden ist, muss das Werkstück bei der Bewegung zumindest im Bereich des Abstandshalters derart deformiert werden, dass diese Bewegung überhaupt ermöglicht wird, da der Abstandshalter insbesondere aus einem festeren Material als das Werkstück gebildet ist, so dass der Abstandshalter nicht durch das Werkstück verformt wird. Vorzugsweise ist der Abstandshalter aus einem hochfesten Material, wie beispielsweise Stahl, Titan oder dergleichen.

Um eine Verformung des Werkstücks möglichst gering zu halten, ist der Abstandshalter beispielsweise stiftartig ausgebildet. Ferner kann der Abstandshalter an einem Endabschnitt eine dem Werkstück zugewandte konvexe oder abgerundete Lagerfläche aufweisen. Hierdurch wird zum Einen die lokale Verformung des Werkstücks bei einer Bewegung des Werkstücks hin zu der Anlagefläche begrenzt und zum Anderen wird das Risiko einer Beschädigung des Werkstücks durch den Abstandshalter reduziert. So kann beispielsweise einer abschnittsweisen Verletzung der Werkstückoberfläche oder einer Beschädigung eines Schutzüberzugs des Werkstücks vorgebeugt werden. Ein weiterer Vorteil einer konvexen Lagerfläche besteht darin, dass die zur Bewegung des Werkstücks notwendige Kraft aufgrund der relativ geringen Verformung vergleichsweise klein ist.

Insbesondere bei einer stiftartigen Ausbildung des Abstandshalters sind vorzugsweise mehrere, insbesondere drei Abstandshalter vorgesehen, um das Werkstück, insbesondere entlang des gesamten an das Loch angrenzenden Bereichs des Werkstücks, in dem definierten Abstand zu halten und einen ausreichend großen Spalt zu gewährleisten. Mehrere Abstandshalter sind zudem vorteilhaft, um das Werkstück stabil an der Matrize lagern bzw. positionieren zu können. Eine konvexe Lagerfläche der jeweiligen Abstandshalter besitzt hierbei zudem den Vorteil einer jeweils annähernd punktförmigen Lagerung des Werkstücks, d.h. die Kontaktfläche zwischen dem Werkstück und einem jeweiligen Abstandshalter ist minimiert. Die konvexe Lagerfläche trägt somit zu einer definierten und zuverlässigen Lagerung des Werkstücks bei. Grundsätzlich sind auch andere Ausgestaltungen des Abstandshalters denkbar. So kann der Abstandshalter beispielsweise ringförmig oder teilringförmig ausgebildet sein.

Gemäß einer weiteren Ausführungsform wird das Werkstück zumindest im Bereich des hintergreifenden Nietabschnitts zumindest teilweise in einen Aufnahmeraum gepresst, der an einem Anschlagabschnitt des Nietelements ausgebildet ist. Der Aufnahmeraum kann beispielsweise eine ringförmig umlaufende Nut sein, welche sich zwischen dem Anschlagabschnitt und dem Nietabschnitt erstreckt. Der Anschlagabschnitt ist insbesondere als ein Flanschabschnitt des Nietelements ausgebildet. Die vorstehend erläuterte Bewegung des Werkstücks hin zu der Anlagefläche kann also insbesondere dadurch bewirkt werden, dass der Flanschabschnitt des Nietelements an dem Werkstück anschlägt und das Werkstück hierdurch bei einer weiteren Bewegung des Nietelements in Richtung zu der Matrize hin zwangsläufig mit bewegt wird.

Der Aufnahmeraum des Nietelements kann mehrere Funktionen besitzen. So kann beispielsweise ein Rand des Loches in den Aufnahmeraum gedrückt werden und zumindest teilweise in dem Aufnahmeraum aufgenommen werden. Das Nietelement kann hierdurch besser an dem Werkstück fixiert werden. Darüber hinaus erlaubt der Aufnahmeraum auch ein Verformen der das Loch begrenzenden Wandung des Werkstücks in eine Richtung weg von dem hintergreifenden Nietabschnitt. Hierdurch wird auf einer dem Aufnahmeraum des Nietelements abgewandten Seite des Werkstücks, d.h. auf der Werkstückunterseite, ein Aufnahmeraum für den Nietabschnitt geschaffen, so dass dieser im Bereich des Hintergriffs in das Werkstück versenkt werden kann, um eine ebene Werkstückunterseite zu erhalten. Mit anderen Worten kann der Nietabschnitt im Bereich der Lochwandung von unten gegen das Werkstück gepresst werden, welches seinerseits in den Aufnahmeraum ausweicht, so dass der Nietabschnitt nach dem Befestigen des Nietelements nicht von dem Werkstück absteht.

Der Aufnahmeraum kann eine oder mehrere Rippen aufweisen, welche sich in radialer Richtung quer zu dem Verlauf des Aufnahmeraums erstrecken. Hierdurch kann eine Verdrehsicherung realisiert werden, indem die Rippe bzw. die Rippen in das Werkstück gepresst werden, wenn das Werkstück in den Aufnahmeraum gedrückt wird. Einem unerwünschten Verdrehen des Nietelements relativ zu dem Werkstück kann so entgegengewirkt werden.

Die Erfindung betrifft ferner ein Befestigungssystem zum Befestigen eines Nietelements an einem Werkstück, bevorzugt an einem Blechteil, insbesondere gemäß einer der vorstehend beschriebenen Ausführungsformen des erfindungsgemäßen Verfahrens, wobei das Werkstück ein zur Aufnahme eines Nietabschnitts des Nietelements vorgesehenes, vorgeformtes Loch aufweist, wobei das Werkstück zumindest im Bereich um das vorgeformte Loch eben ausgebildet ist. Das Befestigungssystem umfasst eine Matrize, welche zumindest einen während dem Befestigungsvorgang fest mit der Matrize verbundenen Abstandshalter aufweist, um das Werkstück während dem Befestigungsvorgang in einem wohldefinierten Abstand von einer Anlagefläche der Matrize zu positionieren, so dass zwischen einer Wandung des Lochs und einem zum Umformen des Nietabschnitts vorgesehenen Stempel der Matrize ein Spalt gebildet ist. Ferner umfasst das Befestigungssystem einen Setzkopf zum Einbringen des Nietelements in das Werkstück, wobei das Nietelement zumindest teilweise in dem Setzkopf aufnehmbar ist Der Abstandshalter ist bezüglich seiner Position justierbar.

Gemäß einer bevorzugten Ausführungsform ragt der Stempel aus der Anlagefläche der Matrize heraus und weist eine Umformfläche auf, durch die der Nietabschnitt zumindest abschnittsweise radial nach außen verformbar ist. Insbesondere ist der Nietabschnitt durch die Umformfläche in Richtung des Spalts verformbar. Die Umformfläche des Stempels ist hierfür vorzugsweise zumindest abschnittsweise konisch und/oder konkav geformt. Die Umformfläche kann stetig oder abgesetzt durch eine oder mehrere Stufen in die Anlagefläche der Matrize übergehen. Ferner kann zwischen der Anlagefläche und dem Stempel eine Ausnehmung vorgesehen sein. Hierdurch kann beispielsweise ein insbesondere dickwandiger Nietabschnitt so umgeformt werden, dass dieser nicht vollständig in das Werkstück gepresst wird, wenn das Werkstück bis zur Anlagefläche bewegt wird. Gemäß einer weiteren bevorzugten Ausführungsform weist der Setzkopf eine Werkstückanlagefläche mit wenigstens einer Ausnehmung auf, welche in einer Richtung einer Befestigungsbewegung des Nietelements zumindest im Wesentlichen fluchtend zu dem Abstandshalter der Matrize angeordnet ist. Die mit dem Abstandshalter fluchtende Ausnehmung des Setzkopfes ist insbesondere dann vorteilhaft, wenn das Werkstück während dem Befestigungsvorgang in Richtung zu der Anlagefläche hin bewegt wird und hierdurch die vorstehend in Zusammenhang mit dem erfindungsgemäßen Verfahren erläuterte lokale Verformung des Werkstücks im Bereich des Abstandshalters verursacht wird. Die Ausnehmung kann dafür sorgen, dass die Verformung auf der der Matrize abgewandten Seite begrenzt wird und/oder dass die Verformung durch eine Form der Ausnehmung (mit) definiert wird. Somit kann die Ausnehmung eine "Hilfsmatrize" darstellen, um die durch den Abstandshalter der "Hauptmatrize" verursachte Verformung des Werkstücks auf eine gewünschten Weise zu beeinflussen. Die Werkstückanlagefläche, welche die Ausnehmung umgibt, trägt zudem dazu bei, dass das Werkstück auf der der (Haupt-)Matrize abgewandten Seite ausschließlich im Bereich der Ausnehmung verformt wird und dass während dem Befestigungsvorgang keine weiteren unerwünschten Verformungen des Werkstücks auftreten.

Ferner kann die Werkstückanlagefläche des Setzkopfs in einer Ebene mit einer Werkstückanlagefläche des Nietelements liegen, wenn das Nietelement in den Setzkopf eingesetzt ist. Diese Fläche ist insbesondere an einem Flanschabschnitt des Nietelements ausgebildet. Beispielsweise kann die Werkstückanlagefläche des Nietelements zusammen mit der Werkstückanlagefläche des Setzkopfs eine gemeinsame Werkstückanlagefläche bilden, an welcher das Werkstück anliegt, wenn das Werkstück in Richtung der Anlagefläche zu der Matrize hin bewegt wird. Eine solche gemeinsame, vergrößerte Werkstückanlagefläche hat den Vorteil, dass die auf das Werkstück ausgeübte Kraft auf eine größere Fläche verteilt wird und eine abschnittsweise Überbeanspruchung des Werkstücks sowie hierdurch drohende Schäden oder Verformungen des Werkstücks vermieden werden.

Ferner ist der Abstandshalter vorzugsweise radial beabstandet von dem Stempel angeordnet. Hierdurch ist gewährleistet, dass der Nietabschnitt vollständig in den Spalt/Zwischenraum eingreifen kann und nicht etwa durch den Abstandshalter behindert wird. Der radiale Abstand zu dem Stempel kann insbesondere so gewählt werden, dass der Nietabschnitt das Werkstück im Bereich des Lochs vollständig hintergreifen kann.

Gemäß einer bevorzugten Ausführungsform sind mehrere, insbesondere drei Abstandshalter symmetrisch um den Stempel der Matrize angeordnet. Beispielsweise können die Abstandshalter auf einer Kreisbahn um den Stempel angeordnet werden. Gemäß einer besonders bevorzugten Ausführungsform sind drei stiftartig ausgebildete Abstandshalter auf äquidistante Weise um den Stempel angeordnet. Hierdurch kann eine vorteilhafte Drei-Punkt-Lagerung des Werkstücks realisiert werden. Wie bereits erwähnt, können die jeweiligen Endabschnitte der Abstandshalter, welche dem Werkstück zugewandt sind, konvex/abgerundet ausgebildet sein, um einerseits eine mechanisch günstige, annähernd punktförmige Lagerung des Werkstücks zu gewährleisten und um andererseits ein möglichst kraftarmes Eindringen der Endabschnitte in das Werkstück zu gestatten, wenn das Werkstück in Richtung zu der Anlagefläche hin bewegt wird.

Es versteht sich, dass im Rahmen der Beschreibung des erfindungsgemäßen Verfahrens genannte Merkmale ebenso auf das beschriebene Befestigungssystem angewandt werden können und umgekehrt. Somit sind alle hier beschriebenen Ausführungsformen des Befestigungssystems insbesondere dazu ausgebildet, nach einem oder mehreren der hier beschriebenen Ausführungsformen des erfindungsgemäßen Verfahrens betrieben zu werden. Ferner können die beschriebenen Ausführungsformen des Befestigungssystems sowie die beschriebenen Ausführungsformen der Verfahren jeweils miteinander kombiniert werden.

Nachfolgend wird die vorliegende Erfindung rein beispielhaft anhand einer vorteilhaften Ausführungsform der Erfindung unter Bezugnahme auf die beigefügten Zeichnungen erläutert. Es zeigen:
- Fig. 1a bis 1c: eine Ausführungsform des erfindungsgemäßen Verfahrens zur Befestigung eines Nietelements an einem Blechteil;
- Fig. 2a und 2b: zwei Perspektivansichten eines Blechteils, an welchem ein Nietelement mit dem Verfahren gemäß Fig. 1 befestigt worden ist;
- Fig. 3: eine Perspektivansicht einer Matrize zum Ausführen des Verfahrens gemäß Fig. 1;
- Fig. 4: eine Perspektivansicht eines Setzkopfs zum Ausführen des Verfahrens gemäß Fig. 1.

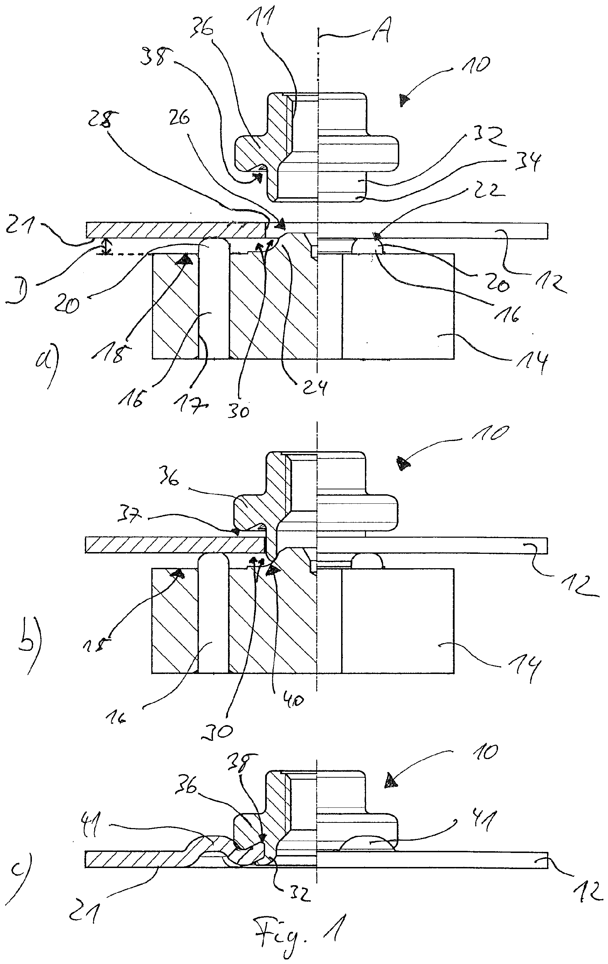

Fig. 1 zeigt drei verschiedene Zustände während eines Befestigens eines rotationssymmetrisch ausgebildeten Nietelements 10 mit einem Innengewinde 11 an einem Blechteil 12. Es versteht sich, dass anstelle des Nietelements 10 auch anders gestaltete Nietelemente verwendet werden können und dass diese nicht notwendigerweise rotationssymmetrisch ausgebildet sein müssen. Auch Nietelemente mit einem Bolzenabschnitt - mit oder ohne Gewinde - sind vorstellbar.

Fig. 1a zeigt eine Ausgangssituation vor dem Befestigungsvorgang, wobei das Nietelement 10 in Fig. 1a oberhalb des Blechteils 12 angeordnet ist. Auf der gegenüberliegenden Seite des Blechteils 12 befindet sich eine Matrize 14. Das Blechteil 12 lagert auf Abstandshaltern 16, welche fest mit der Matrize 14 verbunden sind. D.h. die Abstandshalter 16 bewegen sich im Laufe des Befestigungsvorgangs nicht.

Die Anordnung von Fig. 1a ist zweigeteilt in eine linksseitige Querschnittsansicht und eine rechtsseitige Seitenansicht. Die Grenze zwischen den beiden Ansichten verläuft durch eine Symmetrieachse A, welche sich sowohl auf das rotationssymmetrisch ausgebildete Nietelement 10, das Blechteil 12 - zumindest in einem Bereich um die Befestigungsstelle - und die Matrize 14 bezieht, wie weiter unten näher erläutert werden wird.

Die Abstandshalter 16 erstrecken sich parallel zu der Achse A, wobei die Abstandshalter in entsprechende Bohrungen 17 der Matrize 14 eingeschraubt und daher lösbar mit dieser verbunden sind. Die Abstandshalter 16 sind jeweils stiftartig ausgebildet und weisen ein aus einer Anlagefläche 18 der Matrize 14 herausragenden Endabschnitt 20 auf. Die Länge der Endabschnitte 20 ist einheitlich so eingestellt, dass das Blechteil 12 waagerecht d.h. senkrecht zur Achse A, auf den Abstandshaltern 16 lagert. Dadurch wird ein Abstand D zwischen einer Unterseite 21 des Blechteils 12 - d.h. der der Anlagefläche 18 zugewandten Seite des Blechteils 12 - und der Anlagefläche 18 eingestellt. Jeder Endabschnitt 20 umfasst eine dem Blechteil 12 zugewandte im Wesentlichen konvexe Lagerfläche 22.

Bei Bedarf kann der Abstand D durch eine Justierung der Abstandshalter 16 angepasst werden, z.B. wenn ein anderes Nietelement 10 verwendet werden soll.

Die Matrize 14 weist einen konischen Stempel 24 auf, welcher teilweise in ein an dem Blechteil 12 vorgesehenes, kreisförmiges Loch 26 ragt. Die Achse A verläuft durch die entsprechenden Mittelpunkte des Stempels 24 und des Lochs 26. Diesbezüglich ist die Achse A somit eine Symmetrieachse für das Blechteil 12 - jedenfalls in dem Bereich um das Loch 26 - und die Matrize 14. Das Loch 26 wurde vor dem hier beschriebenen Befestigungsvorgang erzeugt.

Das Blechteil 12 ist im Bereich um das Loch 26 eben ausgebildet und weist in diesem Bereich keine Sicke auf. Optional kann das Blechteil 12 aber auch - wie im hier beschriebenen Ausführungsbeispiel - vollständig eben ausgebildet sein. Dies muss aber nicht notwendigerweise der Fall sein.

Zwischen einer Wandung 28 des Lochs 26 des Blechteils 12 und der Unterseite 21 des Blechteils 12 einerseits und dem Stempel 24 andererseits ist ein Spalt 30 gebildet.

Das über dem Blechteil 12 angeordnete Nietelement 10 weist einen Nietabschnitt 32 auf, der sich in axialer Richtung von einem Flanschabschnitt 36 des Nietelements 10 weg erstreckt und der eine außen abgerundete und innen konische Endkante 34 aufweist. Auf der anderen Seite der Flanschabschnitte 36 ist ein das Gewinde 11 zumindest teilweise tragender Funktionsabschnitt vorgesehen. Das Nietelement 10 ist ein Mutterelement.

In einem Übergangsbereich zwischen dem Flanschabschnitt 36 und dem Nietabschnitt 32 ist eine umlaufende Nut 38 vorgesehen.

Der Außendurchmesser des Nietabschnitts 32 ist geringfügig kleiner als der Durchmesser des Lochs 26, so dass der Nietabschnitt 32 in das Loch 26 einführbar ist.

Das Nietelement 10 wird nun ausgehend von dem in Fig. 1a gezeigten Zustand in axialer Richtung in Richtung zu der Matrize 14 hin bewegt, wobei der Nietabschnitt 32 mit dem Loch 26 des Blechteils 12 fluchtet (koaxiale Ausrichtung).

Fig. 1b zeigt die Anordnung von Fig. 1a in einem zweiten Zustand, in dem der Nietabschnitt 32 in das Loch 26 eingeführt ist. Bei einer weiteren Bewegung des Nietelements 10 in Richtung zu der Matrize 14 hin wirkt der innen liegende Teil der Endkante 34 des Nietabschnitts 32 mit einer konkav ausgebildeten Umformfläche 40 des Stempels 24 zusammen und der Nietabschnitt 32 wird radial nach außen verformt, so dass der Nietabschnitt 32 in den Spalt 30 eingreift und das Blechteil 12 hintergreift.

Während des Umformens des Nietabschnitts 32 wird das Nietelement 10 weiter in Richtung zu der Matrize 14 hin versetzt, wobei der Flanschabschnitt 36 mit einer Anlagefläche 37 an dem Blechteil 12 zur Anlage kommt. Die Länge des Nietabschnitts 32 bzw. der Abstand D sind so angepasst, dass der Flanschabschnitt 36 erst dann an dem Blechteil 12 zur Anlage kommt, wenn der Nietabschnitt 32 im Zuge des Umformens das Blechteil 12 zumindest teilweise hintergreift, insbesondere wenn das die Hintergreifung erzeugende Umformen abgeschlossen ist.

Das Nietelement 10 wird nun weiter in Richtung zu der Matrize 14 hin bewegt, wobei das Blechteil 12 in Richtung zu der Anlagefläche 18 der Matrize 14 hin mitbewegt wird. Hierbei wird das Blechteil 12 im Bereich der Abstandshalter 16 lokal verformt, so dass die Abstandshalter 16 mit ihren Endabschnitten 20 in das Blechteil 12 eingreifen und das Blechteil 12 an der Anlagefläche 18 zur Anlage kommt. Die das Blechteil 12 verformenden Endabschnitte 20 der Abstandshalter 16 verursachen dabei jeweils eine Auswölbung 41 des Blechteils 12 auf der der Matrize 14 abgewandten Seite, wie weiter unten näher erläutert werden wird.

In Fig. 1c ist das Blechteil 12 mit dem Nietelement 10 nach dem Abschluss des Befestigungsverfahrens gezeigt. Es ist ersichtlich, dass das Blechteil 12 während seiner Bewegung von der in Fig. 1b gezeigten Position in Richtung zu der Matrize 14 hin das Blechteil 12 im Bereich des hintergreifenden Nietabschnitts 32 eine Verformung erfährt. Hierbei weicht der ursprünglich an das Loch 26 angrenzende Bereich des Blechteils 12 aufgrund eines Zusammenwirkens mit dem das Blechteil 12 hintergreifenden Nietabschnitt 32 aus und wird in die Nut 38 des Nietelements 10 gepresst. Gleichzeitig wird der hintergreifende Nietabschnitt 32 durch ein Zusammenwirken mit der Umformfläche 40 des Stempels 24 vollständig in die senkrecht zur Achse A verlaufenden Ebene des Blechteils 12 versetzt, sodass die der Matrize 14 zugewandte Unterseite 21 des Blechteils 12 im Wesentlichen eben ausgebildet ist. D.h. der umgeformte Nietabschnitt 32 ragt nicht aus der Ebene der Unterseite 21 hervor. Zusätzlich wird der Nietabschnitt 32 teilweise so deformiert, dass der Nietabschnitt 32 sich an das Blechteil 12 anschmiegt. Hierdurch wird ein besonders guter Form- und Kraftschluss zwischen dem Nietelement 10 und dem Blechteil 12 erzielt.

Wie oben erwähnt, greifen die Endabschnitte 20 der Abstandshalter 16 im Zuge der Bewegung des Blechteils 12 hin zur Anlagefläche 18 der Matrize 14 in das Blechteil 12 ein. Im Ergebnis werden dadurch an der Oberseite des Blechteils 12 die bereits erwähnten Auswölbungen 41 erzeugt (Fig. 1c).

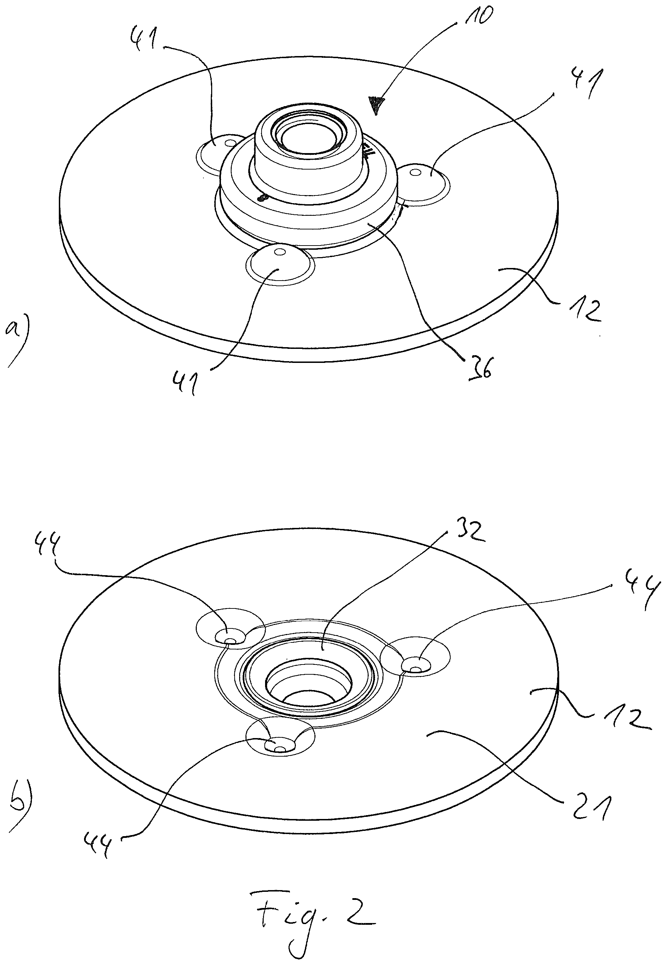

Fig. 2a zeigt das Blechteil 12 aus Fig. 1c mit dem befestigten Nietelement 10 in einer Perspektivansicht von schräg oben. Die Auswölbungen 41 sind hier besonders gut zu erkennen. Es sind drei Auswölbungen 41 symmetrisch um den Flanschabschnitt 36 des Nietelements 10 verteilt angeordnet. In Fig. 2b ist das Blechteil 12 aus Fig. 2a bezüglich seiner Unterseite 21 gezeigt, welche während dem Befestigungsvorgang der Matrize 14 zugewandt ist. Der Nietabschnitt 32 ist in das Blechteil 12 versenkt und steht nicht von dem Blechteil 12 ab. Ferner sind auf der Unterseite des Blechteils 12 durch die Endabschnitte 20 erzeugte Ausnehmungen 44 vorhanden, die den jeweiligen Auswölbungen 41 auf der Oberseite des Blechteils 12 entsprechen.

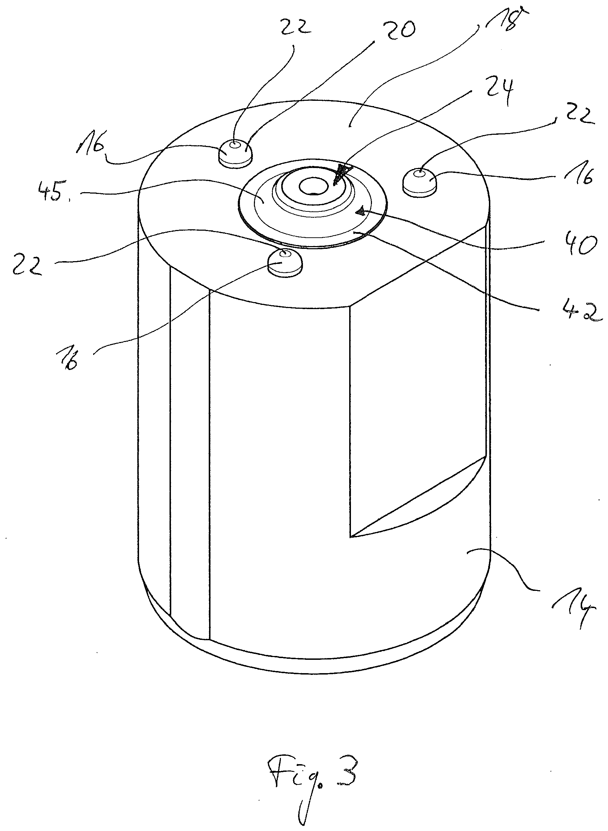

Fig. 3 zeigt eine Perspektivansicht der Matrize 14 aus Fig. 1. Die Matrize 14 weist drei symmetrisch um den Stempel 24 angeordnete Abstandshalter 16 auf, die mit ihrem jeweiligen Endabschnitt 20 aus der Anlagefläche 18 der Matrize 14 herausragen. Die Abstandshalter 16 sind jeweils radial beabstandet von dem Stempel 24 angeordnet.

Die Umformfläche 40 umfasst einen äußeren Auslaufabschnitt 42, welcher in einen konkav gewölbten, inneren Umformabschnitt 45 übergeht. Die Anlagefläche 18 ist gegenüber dem Auslaufabschnitt 42 des Stempels 24 in axialer Richtung abgesetzt (Fig. 1a, 1b und Fig. 3). Hierdurch wird zuverlässig erreicht, dass der hintergreifende Nietabschnitt 32 nach dem Befestigen des Nietelements 10 vollständig in die Ebene des Blechteils 12 versetzt ist, so dass die Unterseite 21 des Blechteils 12 eine ebene Anlagefläche bildet.

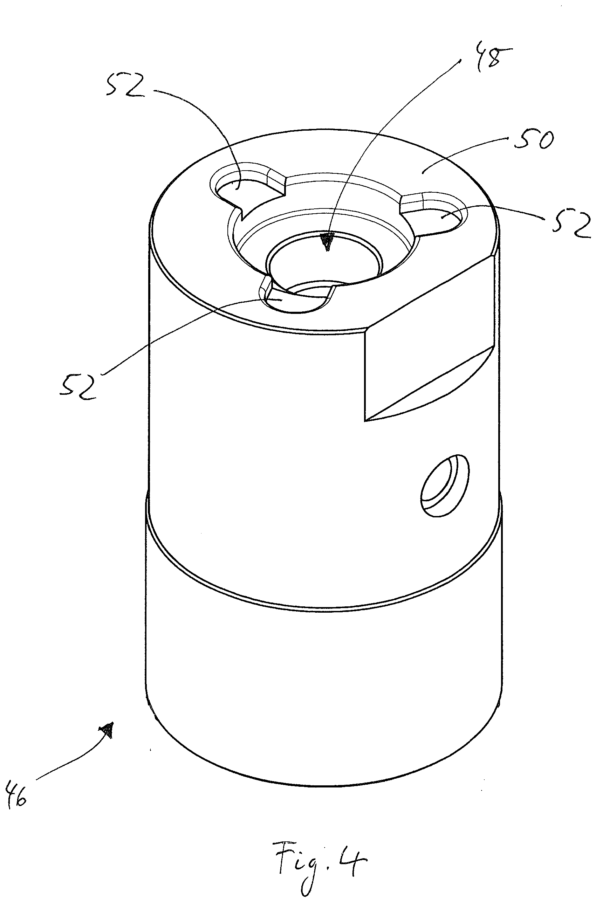

Fig. 4 zeigt eine Perspektivansicht eines Setzkopfs 46, durch den das Nietelement 10 ausgehend von der in Fig. 1a dargestellten Position in Richtung zu der Matrize 14 hin bewegt und an dem Blechteil 12 befestigt werden kann. Der Setzkopf 46 weist einen Aufnahmeraum 48 auf, welcher komplementär zu dem Nietelement 10 ausgebildet ist, so dass das Nietelement 10 in dem Aufnahmeraum 48 aufnehmbar bzw. einsetzbar ist. Der Aufnahmeraum 48 ist so dimensioniert, dass bei eingesetztem Nietelement 10 nur der Nietabschnitt 32 aus einer Anlagefläche 50 des Setzkopfs 46 herausragt. Somit bildet der Flanschabschnitt 36 bzw. seine Anlagefläche 37 zusammen mit der Anlagefläche 50 des Setzkopfs 46 eine gemeinsame Anlagefläche für das Blechteil 12.

Der Setzkopf 46 weist ferner drei symmetrisch um den Aufnahmeraum 48 vorgesehene Ausnehmungen 52 auf. Die symmetrische Anordnung der Ausnehmungen 52 um den Aufnahmeraum 48 ist komplementär zu der symmetrischen Anordnung der Abstandshalter 16 um den Stempel 24, so dass die Ausnehmungen 52 mit den Abstandshaltern 16 fluchten, wenn das Nietelement 10 in den Aufnahmeraum 48 des Setzkopfs 46 eingesetzt und durch eine Bewegung des Setzkopfs 46 zu der Matrize 14 hin an dem Blechteil 12 befestigt wird. Die Ausnehmungen 52 begrenzen während dem Befestigen des Nietelements 10 den Umfang der Auswölbungen 41 auf der Oberseite des Blechteils 12.

### Bezugszeichenliste

- 10: Nietelement
- 11: Innengewinde
- 12: Blechteil
- 14: Matrize
- 16: Abstandshalter
- 17: Bohrung
- 18: Anlagefläche
- 20: Endabschnitt
- 21: Blechteilunterseite
- 22: Lagerfläche
- 24: Stempel
- 26: Loch
- 28: Wandung
- 30: Spalt
- 32: Nietabschnitt
- 34: Endkante
- 36: Flanschabschnitt
- 37: Anlagefläche
- 38: Nut
- 40: Umformfläche
- 41: Auswölbung
- 42: Auslaufabschnitt
- 44: Ausnehmung
- 45: Umformabschnitt
- 46: Setzkopf
- 48: Aufnahmeraum
- 50: Anlagefläche
- 52: Ausnehmung

- A: Symmetrieachse
- D: Abstand

## Patentansprüche

1. Befestigungssystem zum Befestigen eines Nietelements (10) an einem Werkstück, insbesondere an einem Blechteil (12), wobei das Werkstück (12) ein zur Aufnahme eines Nietabschnitts (32) des Nietelements (10) vorgesehenes, vorgeformtes Loch (26) aufweist, wobei das Werkstück (12) zumindest im Bereich um das vorgeformte Loch (26) eben ausgebildet ist, wobei das Befestigungssystem eine Matrize (14) umfasst, welche zumindest einen während dem Befestigungsvorgang fest mit der Matrize (14) verbundenen Abstandshalter (16) aufweist, um das Werkstück (12) während dem Befestigungsvorgang in einem wohldefinierten Abstand (D) von einer Anlagefläche (18) der Matrize (14) zu positionieren, so dass zwischen einer Wandung (28) des Lochs (26) und einem zum Umformen des Nietabschnitts (32) vorgesehenen Stempel (24) der Matrize (14) ein Spalt (30) gebildet ist,
wobei das Befestigungssystem ferner einen Setzkopf (46) zum Einbringen des Nietelements (10) in das Werkstück (12) umfasst, in den das Nietelement (10) zumindest teilweise aufnehmbar ist,
**dadurch gekennzeichnet, dass**
der Abstandshalter (16) bezüglich seiner Position justierbar ist.

2. Befestigungssystem nach Anspruch 1,
**dadurch gekennzeichnet, dass**
der Stempel (24) aus der Anlagefläche (18) der Matrize (14) herausragt und eine Umformfläche (40) aufweist, durch die der Nietabschnitt (32) zumindest abschnittsweise radial nach außen verformt wird, insbesondere wobei die Umformfläche (40) zumindest abschnittsweise konisch und/oder konkav geformt ist.

3. Befestigungssystem nach Anspruch 1 oder 2,
**dadurch gekennzeichnet, dass**
der Setzkopf (46) eine Werkstückanlagefläche (50) mit wenigstens einer Ausnehmung (52) aufweist, welche in einer Richtung einer Befestigungsbewegung des Nietelements (10) zumindest im Wesentlichen fluchtend zu dem Abstandshalter (16) der Matrize (14) angeordnet ist, insbesondere wobei die Werkstückanlagefläche (50) in einer Ebene mit einer Werkstückanlagefläche des Nietelements (10) liegt, wenn das Nietelement (10) in den Setzkopf (46) eingesetzt ist, insbesondere wobei die Werkstückanlagefläche (37) des Nietelements (10) an einem Flanschabschnitt (36) des Nietelements (10) ausgebildet ist.

4. Befestigungssystem nach einem der Ansprüche 1 bis 3, **dadurch gekennzeichnet, dass**
der Abstandshalter (16) lösbar mit der Matrize (14) verbunden ist.

5. Befestigungssystem nach einem der Ansprüche 1 bis 4, **dadurch gekennzeichnet, dass**
der Abstandshalter (16) radial beabstandet von dem Stempel (24) angeordnet ist.

6. Befestigungssystem nach einem der Ansprüche 1 bis 5, **dadurch gekennzeichnet, dass**
mehrere, insbesondere drei Abstandshalter (16) symmetrisch in Umfangsrichtung um den Stempel (24) der Matrize (14) verteilt angeordnet sind.

7. Verfahren zum Befestigen eines Nietelements (10) an einem Werkstück,
insbesondere an einem Blechteil (12), das ein zur Aufnahme eines Nietabschnitts (32) des Nietelemehts (10) vorgesehenes, vorgeformtes Loch (26)
aufweist und das zumindest im Bereich um das vorgeformte Loch (26) eben ausgebildet ist, mittels eines Befestigungssystems gemäß einem der vorstehenden Ansprüche,
wobei das Werkstück (12) vor dem Befestigungsvorgang mittels zumindest einem während dem Befestigungsvorgang fest mit einer Matrize (14) zum Umformen des Nietabschnitts (32) verbundenen Abstandshalter (16) in einem wohldefinierten Abstand (D) von einer Anlagefläche (18) der Matrize (14) positioniert wird, so dass zwischen einer Wandung (28) des Lochs (26) und einem zum Umformen des Nietabschnitts (32) vorgesehenen Stempel (24) der Matrize (14) ein Spalt (30) gebildet ist, und
wobei der Nietabschnitt (32) im Zuge des Befestigungsvorgangs in den Spalt (30) eingebracht wird und durch den Stempel (24) umgeformt wird, um das Werkstück (12) im Bereich des Loches (26) zu hintergreifen.

8. Verfahren nach Anspruch 7,
**dadurch gekennzeichnet, dass**
der Abstandshalter (16) aus der Anlagefläche (18) der Matrize (14) herausragt, wobei der aus der Anlagefläche (18) herausragende Abschnitt (20) des Abstandshalters (16) den Abstand (D) definiert.

9. Verfahren nach Anspruch 7 oder 8,
**dadurch gekennzeichnet, dass**
das Werkstück (12) erst nach einem zumindest abschnittsweisen Einbringen des Nietabschnitts (32) in den Spalt (30) zu der Anlagefläche (18) hin bewegt wird.

10. Verfahren nach einem der Ansprüche 7 bis 9,
**dadurch gekennzeichnet, dass**
das Werkstück (12) erst nach dern Beginnn eines Umformens des Nietabschnitts (32) zu der Anlagefläche (18) hin bewegt wird.

11. Verfahren nach einem der Ansprüche 7 bis 10,
**dadurch gekennzeichnet, dass**
das Werkstück (12) erst nach dem Abschluss des Umformens des Nietabschnitts (32) zu der Anlagefläche (18) hin bewegt wird.

12. Verfahren nach einem der vorstehenden Ansprüche 7 bis 11, **dadurch gekennzeichnet, dass**
das Werkstück (12) durch einen Anschlagabschnitt (36) des Nietelements (10), insbesondere einen Flanschabschnitt (36) des Nietelements (10) und/oder einen das Nietelement (10) einbringenden Setzkopf (46) zu der Anlagefläche (18) hin bewegt wird.

13. Verfahren nach einem der Ansprüche 7 bis 12,
**dadurch gekennzeichnet, dass**
das Werkstück (12) bei einer Bewegung hin zu der Anlagefläche (18) durch den Abstandshalter (16) lokal verformt wird.

14. Verfahren nach einem der Ansprüche 7 bis 13,
**dadurch gekennzeichnet, dass**
das Nietelement (10) während dem Befestigungsvorgang in ein komplementär zu dem Nietelement (10) ausgebildeten Aufnahmeraum (46) eines Setzkopfes (46) aufgenommen ist, wobei der Setzkopf (46) eine Werkstückanlagefläche (50) mit wenigstens einer Ausnehmung (52) aufweist, welche in einer Richtung einer Befestigungsbewegung des Nietelements (10) zumindest im Wesentlichen fluchtend zu dem zumindest einen Abstandshalter (16) der Matrize (14) angeordnet ist, so dass das Werkstück (12) im Zuge des Befestigungsvorgangs abschnittsweise in die Ausnehmung (52) gepresst wird.

15. Verfahren nach einem der Ansprüche 7 bis 14,
**dadurch gekennzeichnet, dass**
das Werkstück (12) zumindest im Bereich des ihn hintergreifenden Nietabschnitts (32) zumindest teilweise in einen Aufnahmeraum, insbesondere in eine Nut (38) gepresst wird, der an einem Anschlagabschnitt, insbesondere Flanschabschnitt (36) des Nietelements (10) ausgebildet ist.

## Claims

1. A fastening system for fastening a rivet element (10) to a workpiece, in particular to a sheet metal part (12), wherein the workpiece (12) has a pre-shaped hole (26) provided for the reception of a rivet section (32) of the rivet element (10), wherein the workpiece (12) is made planar at least in a region around the pre-shaped hole (26), wherein the fastening system includes a die (14) which has at least one spacer (16) which is fixedly connected to the die (14) during the fastening process in order to position the workpiece (12) at a well-defined spacing (D) from a contact surface (18) of the die (14) during the fastening process, so that a gap (30) is formed between a wall (28) of the hole (26) and a punch (24) of the die (14), which is provided for the reshaping of the rivet section (32),
wherein the fastening system furthermore includes a setting head (46) for introducing the rivet element (10) into the workpiece (12), said rivet element (10) being at least partly receivable in the setting head (46), **characterized in that**
the spacer (16) can be adjusted with respect to its position.

2. A fastening system in accordance with claim 1,
**characterized in that**
the punch (24) projects out of the contact surface (18) of the die (14) and has a reshaping surface (40) by which the rivet section (32) is reshaped radially outwardly at least section-wise, in particular wherein the reshaping surface (40) is at least conically and/or concavely shaped at least section-wise.

3. A fastening system in accordance with claim 1 or claim 2, **characterized in that**
the setting head (46) has a workpiece contact surface (50) having at least one cavity (52) which is at least substantially aligned with the spacer (16) of the die (14) in a direction of a fastening movement of the rivet element (10), in particular wherein the workpiece contact surface (50) lies in a plane with a workpiece contact surface of the rivet element (10) when the rivet element (10) is inserted into the setting head (46), in particular wherein the workpiece contact surface (37) of the rivet element (10) is formed at a flange portion (36) of the rivet element (10).

4. A fastening system in accordance with one of claims 1 to 3, **characterized in that**
the spacer (16) is releasably connected to the die (14).

5. A fastening system in accordance with one of claims 1 to 4, **characterized in that**
the spacer (16) is arranged radially spaced apart from the punch (24).

6. A fastening system in accordance with one of claims 1 to 5, **characterized in that**
a plurality of spacers (16), in particular three spacers (16), are arranged distributed symmetrically around the punch (24) of the die (14) in the peripheral direction.

7. A method of fastening a rivet element (10) to a workpiece, in particular a sheet metal part (12), by means of a fastening system in accordance with any one of the preceding claims, the workpiece having a pre-shaped hole (26) provided for the reception of a rivet section (32) of the rivet element (10) and which is made planar at least in the region around the pre-shaped hole (26),
wherein, prior to the fastening process, the workpiece (12) is positioned at a well-defined spacing (D) from a contact surface (18) of the die (14) by means of at least one spacer (16) which is fixedly connected to a die (14) for the reshaping of the rivet section (32) during the fastening process, so that a gap (30) is formed between a wall (28) of the hole (26) and a punch (24) of the die (14), which is provided for the reshaping of the rivet section (32), and wherein the rivet section (32) is introduced into the gap (30) in the course of the fastening process and is reshaped by the punch (24) in order to engage behind the workpiece (12) in the region of the hole (26).

8. A method in accordance with claim 7,
**characterized in that**
the spacer (16) projects out of the contact surface (18) of the die (14), with the section (20) of the spacer (16) which projects out of the contact surface (18) defining the spacing (D).

9. A method in accordance with claim 7 or claim 8,
**characterized in that**
the workpiece (12) is only moved toward the contact surface (18) after an introduction of at least a part of the rivet section (32) into the gap (30).

10. A method in accordance with one of the claims 7 to 9,
**characterized in that**
the workpiece (12) is only moved toward the contact surface (18) after the start of a reshaping of the rivet section (32).

11. A method in accordance with one of the claims 7 to 10, **characterized in that**
the workpiece (12) is only moved toward the contact surface (18) after the completion of the reshaping of the rivet section (32).

12. A method in accordance with one of the claims 7 to 11, **characterized in that**
the workpiece (12) is moved toward the contact surface (18) by an abutment portion (36) of the rivet element (10), in particular by a flange portion (36) of the rivet element (10) and/or by a setting head (46) which introduces the rivet element (10).

13. A method in accordance with one of the claims 7 to 12, **characterized in that**
the workpiece (12) is locally deformed by the spacer (16) on a movement toward the contact surface (18).

14. A method in accordance with one of the claims 7 to 13, **characterized in that**
the rivet element (10) is received in a reception chamber (46) of a setting head (46) during the fastening process, the reception chamber being formed in a complementary manner to the rivet element (10), with the setting head (46) having a workpiece contact surface (50) having at least one cavity (52) which is at least substantially aligned with the at least one spacer (16) of the die (14) in a direction of a fastening movement of the rivet element (10) so that the workpiece (12) is pressed section-wise into the cavity (52) in the course of the fastening process.

15. A method in accordance with one of the claims 7 to 14, **characterized in that**
the workpiece (12) is pressed, at least in the region of the rivet section (32) engaging behind the workpiece (12), at least partly into a receiving recess, in particular into a groove (38), which is in particular formed at a flange portion (36) of the rivet element (10).

## Revendications

1. Système de fixation pour fixer un élément de rivet (10) sur une pièce à œuvrer, en particulier sur une pièce en tôle (12), la pièce à œuvrer (12) présentant un trou préformé (26) prévu pour recevoir une portion de rivet (32) de l'élément de rivet (10), la pièce à œuvrer (12) étant réalisée plane au moins dans la zone autour du trou préformé (26), le système de fixation comprenant une matrice (14) qui présente au moins un élément écarteur (16) qui est fermement relié à la matrice (14) pendant l'opération de fixation, afin de positionner la pièce à œuvrer (12) à une distance bien définie (D) par rapport à une surface d'appui (18) de la matrice (14) pendant l'opération de fixation, de sorte qu'un interstice (30) est formé entre une paroi (28) du trou (26) et un poinçon (24) de la matrice (14) prévu pour former la portion de rivet (32),
le système de fixation comprenant en outre une tête de pose (46) pour insérer l'élément de rivet (10) dans la pièce à œuvrer (12), tête dans laquelle l'élément de rivet (10) peut être reçu au moins partiellement,
**caractérisé en ce que**
l'élément écarteur (16) est ajustable par rapport à sa position.

2. Système de fixation selon la revendication 1,
**caractérisé en ce que**
le poinçon (24) fait saillie de la surface d'appui (18) de la matrice (14) et présente une surface de déformation (40) par laquelle la portion de rivet (32) est déformée au moins localement radialement vers l'extérieur, en particulier la surface de déformation (40) étant formée au moins localement de façon conique et/ou concave.

3. Système de fixation selon la revendication 1 ou 2,
**caractérisé en ce que**
la tête de pose (46) présente une surface d'appui de pièce (50) pourvue d'au moins un évidement (52) qui est disposé au moins sensiblement en alignement avec l'élément écarteur (16) de la matrice (14) dans une direction d'un mouvement de fixation de l'élément de rivet (10), en particulier la surface d'appui de pièce (50) se situant dans un plan avec une surface d'appui de pièce de l'élément de rivet (10) lorsque l'élément de rivet (10) est inséré dans la tête de pose (46), en particulier la surface d'appui de pièce (37) de l'élément de rivet (10) étant réalisée sur une portion de bride (36) de l'élément de rivet (10).

4. Système de fixation selon l'une des revendications 1 à 3,
**caractérisé en ce que**
l'élément écarteur (16) est relié de façon détachable à la matrice (14).

5. Système de fixation selon l'une des revendications 1 à 4,
**caractérisé en ce que**
l'élément écarteur (16) est disposé radialement à distance du poinçon (24).

6. Système de fixation selon l'une des revendications 1 à 5,
**caractérisé en ce que**
plusieurs, en particulier trois éléments écarteurs (16) sont disposés en étant répartis symétriquement en direction circonférentielle autour du poinçon (24) de la matrice (14).

7. Procédé de fixation d'un élément de rivet (10) sur une pièce à œuvrer, en particulier sur une pièce en tôle (12), qui présente un trou préformé (26) prévu pour recevoir une portion de rivet (32) de l'élément de rivet (10) et qui est réalisée plane au moins dans la zone autour du trou préformé (26), à l'aide d'un système de fixation selon l'une des revendications précédentes, dans lequel
la pièce à œuvrer (12) est positionnée à une distance bien définie (D) par rapport à une surface d'appui (18) d'une matrice (14) avant l'opération de fixation au moyen d'au moins un élément écarteur (16) qui est relié fermement à la matrice (14) de déformation de la portion de rivet (32) pendant l'opération de fixation, de sorte qu'un interstice (30) est formé entre une paroi (28) du trou (26) et un poinçon (24) de la matrice (14) prévu pour déformer la portion de rivet (32), et
la portion de rivet (32) est insérée dans l'interstice (30) au cours de l'opération de fixation et est déformée par le poinçon (24) afin d'engager par l'arrière la pièce à œuvrer (12) au niveau du trou (26).

8. Procédé selon la revendication 7,
**caractérisé en ce que**
l'élément écarteur (16) fait saillie de la surface d'appui (18) de la matrice (14), et la portion (20) de l'élément écarteur (16) qui fait saillie de la surface d'appui (18) définit ladite distance (D).

9. Procédé selon la revendication 7 ou 8,
**caractérisé en ce que**
la pièce à œuvrer (12) n'est déplacée vers la surface d'appui (18) qu'après que la portion de rivet (32) a été insérée au moins localement dans l'interstice (30).

10. Procédé selon l'une des revendications 7 à 9,
**caractérisé en ce que**
la pièce à œuvrer (12) n'est déplacée vers la surface d'appui (18) qu'après le début d'une déformation de la portion de rivet (32).

11. Procédé selon l'une des revendications 7 à 10,
**caractérisé en ce que**
la pièce à œuvrer (12) n'est déplacée vers la surface d'appui (18) qu'après l'achèvement de la déformation de la portion de rivet (32).

12. Procédé selon l'une des revendications précédentes 7 à 11, **caractérisé en ce que**
la pièce à œuvrer (12) est déplacée vers la surface d'appui (18) par une portion de butée (36) de l'élément de rivet (10), en particulier une portion de bride (36) de l'élément de rivet (10) et/ou par une tête de pose (46) insérant l'élément de rivet (10).

13. Procédé selon l'une des revendications 7 à 12,
**caractérisée en ce que**
la pièce à œuvrer (12) est déformée localement par l'élément écarteur (16) lors d'un mouvement vers la surface d'appui (18).

14. Procédé selon l'une des revendications 7 à 13,
**caractérisé en ce que**
pendant l'opération de fixation, l'élément de rivet (10) est reçu dans un espace de réception (46) d'une tête de pose (46) qui est réalisé de manière complémentaire à l'élément de rivet (10), la tête de pose (46) présentant une surface d'appui de pièce (50) pourvue d'au moins un évidement (52) qui est disposé au moins sensiblement en alignement avec ledit au moins un élément écarteur (16) de la matrice (14) dans une direction d'un mouvement de fixation de l'élément de rivet (10), de sorte que la pièce à œuvrer (12) est pressée localement dans l'évidement (52) au cours de l'opération de fixation.

15. Procédé selon l'une des revendications 7 à 14,
**caractérisé en ce que**
au moins dans la zone de la portion de rivet (32) engageant par l'arrière la pièce à œuvrer (12), celle-ci est pressée au moins partiellement dans un espace de réception, en particulier dans une rainure (38), qui est formé sur une portion de butée, en particulier sur une portion de bride (36) de l'élément de rivet (10).
